(19) Europäisches Patentamt
European Patent Office
Office européen des brevets

(11) **EP 2 528 439 B1**

(12) **EUROPEAN PATENT SPECIFICATION**

(45) Date of publication and mention
of the grant of the patent:
**25.11.2015 Bulletin 2015/48**

(21) Application number: **11702118.8**

(22) Date of filing: **27.01.2011**

(51) Int Cl.:
*A01N 43/40* [(2006.01)]  *A01N 39/04* [(2006.01)]
*A01P 13/00* [(2006.01)]

(86) International application number:
**PCT/US2011/022690**

(87) International publication number:
**WO 2011/094388 (04.08.2011 Gazette 2011/31)**

(54) **SYNERGISTIC HERBICIDAL COMPOSITION CONTAINING AMINOPYRALID AND 2,4-DICHLOROPHENOXYACETIC ACID**

SYNERGISTISCHE HERBIZIDZUSAMMENSETZUNG MIT AMINOPYRALID UND 2,4-DICHLORPHENOXYACETYLSÄURE

COMPOSITION HERBICIDE SYNERGIQUE CONTENANT DE L'AMINOPYRALIDE ET DE L'ACIDE 2,4-DICHLOROPHÉNOXYACÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2010 US 299517 P**

(43) Date of publication of application:
**05.12.2012 Bulletin 2012/49**

(73) Proprietor: **Dow AgroSciences, LLC**
**Indianapolis, IN 46268 (US)**

(72) Inventor: **CARRANZA GARZON, Nelson**
**Ibague (CO)**

(74) Representative: **f & e patent**
**Fleischer, Engels & Partner mbB, Patentanwälte**
**Braunsberger Feld 29**
**51429 Bergisch Gladbach (DE)**

(56) References cited:
**WO-A1-2011/082162     US-A1- 2009 325 803**

• **KRISTIN K. PAYNE ET AL: "Impact of Herbicides and Application Timing on Weed Control, Yield, and Nutritive Value of Tall Fescue Pastures and Hayfields", WEED TECHNOLOGY, vol. 24, no. 4, 1 October 2010 (2010-10-01), pages 515-522, XP55016239, ISSN: 0890-037X, DOI: 10.1614/WT-D-10-00039.1**
• **STEPHEN F. ENLOE ET AL: "Russian Knapweed (Acroptilon repens) Control with Low Rates of Aminopyralid on Range and Pasture", INVASIVE PLANT SCIENCE AND MANAGEMENT, vol. 1, no. 4, 1 October 2008 (2008-10-01), pages 385-389, XP55016257, ISSN: 1939-7291, DOI: 10.1614/IPSM-08-088.1**
• **JASON A. FERRELL ET AL: "Control of Tropical Soda Apple (Solanum viarum) with Aminopyralid 1", WEED TECHNOLOGY, vol. 20, no. 2, 1 April 2006 (2006-04-01), pages 453-457, XP55016252, ISSN: 0890-037X, DOI: 10.1614/WT-05-120R.1**

**Description**

The protection of crops from weeds and other vegetation which inhibit crop growth is a constantly recurring problem in agriculture. To help combat this problem, researchers in the field of synthetic chemistry have produced an extensive variety of chemicals and chemical formulations effective in the control of such unwanted growth. Chemical herbicides of many types have been disclosed in the literature and a large number are in commercial use.

In some cases, herbicidal active ingredients have been shown to be more effective in combination than when applied individually and this is referred to as "synergism." As described in the Herbicide Handbook of the Weed Science Society of America, Eighth Edition, 2002, p. 462, "'synergism' [is] an interaction of two or more factors such that the effect when combined is greater than the predicted effect based on the response to each factor applied separately."

US 2009/0325803 A1 relates to methods and compositions for controlling aquatic weeds, including, among others, synergistic mixtures of triclopyr and 2,4-D.

Aminopyralid has been used, among others, to control tropical soda apple (J. A. Ferrell et al. Weed Technology 2006, 20 (2), 453-457). Further, aminopyralid has also been used to control Russian knapweed on range and pasture. Under the conditions employed by S. E. Enloe et al. (Invasive Plant Science and Management 2008, 1 (4), 385-389), the addition of 2,4-D did not improve control.

The present invention is based on the discovery that 2,4-D and aminopyralid, already known individually for their herbicidal efficacy, display a synergistic effect when applied in combination.

The herbicidal compounds forming the synergistic composition of this invention are independently known in the art for their effects on plant growth.

The present invention concerns a synergistic herbicidal mixture comprising an herbicidally effective amount of (a) aminopyralid and (b) 2,4-D according to claim 1. The compositions may also contain an agriculturally acceptable adjuvant or carrier.

The present invention also concerns a method of controlling the growth of undesirable vegetation in rice, and the use of this synergistic composition.

Aminopyralid is the common name for 4-amino-3,6-dichloro-2-pyridinecarboxylic acid. Its herbicidal activity is described in *The Pesticide Manual*, Fourteenth Edition, 2006. Aminopyralid controls annual and perennial broadleaf weeds in grassland.

2,4-D is the common name for 2,4-dichlorophenoxyacetic acid. Its herbicidal activity is described in The Pesticide Manual, Fourteenth Edition, 2006. 2,4-D controls both annual and perennial broadleaf weeds in a variety of grassy crops.

The term herbicide is used herein to mean an active ingredient that kills, controls or otherwise adversely modifies the growth of plants. An herbicidally effective or vegetation controlling amount is an amount of active ingredient which causes an adversely modifying effect and includes deviations from natural development, killing, regulation, desiccation, retardation, and the like. The terms plants and vegetation include germinant seeds, emerging seedlings and established vegetation.

Herbicidal activity is exhibited by the compounds of the synergistic mixture when they are applied directly to the plant or to the locus of the plant at any stage of growth or before planting or emergence. The effect observed depends upon the plant species to be controlled, the stage of growth of the plant, the application parameters of dilution and spray drop size, the particle size of solid components, the environmental conditions at the time of use, the specific compound employed, the specific adjuvants and carriers employed, the soil type, and the like, as well as the amount of chemical applied. These and other factors can be adjusted as is known in the art to promote non-selective or selective herbicidal action. Generally, it is preferred to apply the composition of the present invention postemergence to relatively immature undesirable vegetation to achieve the maximum control of weeds.

Both aminopyralid and 2,4-D are carboxylic acids and can be applied either as an ester or a salt. Preferred esters of 2,4-D include the ethyl, isopropyl, butyl, isobutyl, isooctyl, 2-ethylhexyl and 2-butoxyethyl esters. Preferred salts of 2,4-D include the sodium, isopropylammonium, dimethylammonium, diethanolammonium, di-isopropylammonium, triethanolammonium, tri-isopropylammonium, tri-isopropanolammonium and choline salts. Preferred esters of aminopyralid include the butyl ester. Preferred salts of aminopyralid include the potassium, dimethylammonium, and tri-isopropanolammonium salts.

In the composition of this invention, the active ingredient ratio (wt:wt) of 2,4-D to aminopyralid on an acid equivalent (ae) basis at which the herbicidal effect is synergistic lies within the range of between 10:1 and 20:1 or is 20:1 with a ratio of 20:1 being preferred.

The rate at which the synergistic composition is applied will depend upon the particular type of weed to be controlled, the degree of control required, and the timing and method of application. In general, the composition of the invention can be applied at an application rate of between 104 grams acid equivalent per hectare (gae/ha) and 1180 gae/ha based on the total amount of active ingredients in the composition. An application rate between 180 gae/ha and 840 gae/ha is preferred. In an especially preferred embodiment of the invention, 2,4-D is applied at a rate between 180 gae/ha and 240 gae/ha, and aminopyralid is applied at a rate between 9 gae/ha and 12 gae/ha.

The components of the synergistic mixture of the present invention can be applied either separately or as part of a multipart herbicidal system.

The synergistic mixture of the present invention can be applied in conjunction with one or more other herbicides to control a wider variety of undesirable vegetation. When used in conjunction with other herbicides, the composition can be formulated with the other herbicide or herbicides, tank mixed with the other herbicide or herbicides or applied sequentially with the other herbicide or herbicides. Some of the herbicides that can be employed in conjunction with the synergistic composition of the present invention include: acetochlor, acifluorfen, aclonifen, AE0172747, alachlor, amidosulfuron, aminocyclopyraclor, aminotriazole, ammonium thiocyanate, anilifos, atrazine, AVH 301, azimsulfuron, benfuresate, bensulfuron-methyl, bentazone, benthiocarb, benzobicyclon, bifenox, bispyribac-sodium, bromacil, bromoxynil, butachlor, butafenacil, butralin, cafenstrole, carbetamide, carfentrazone-ethyl, chlorflurenol, chlorimuron, chlorpropham, cinosulfuron, clethodim, clomazone, clopyralid, cloransulam-methyl, cyclosulfamuron, cycloxydim, cyhalofop-butyl, dicamba, dichlobenil, dichlorprop-P, diclosulam, diflufenican, diflufenzopyr, dimethenamid, dimethenamid-p, diquat, dithiopyr, diuron, EK2612, EPTC, esprocarb, ET-751, ethoxysulfuron, ethbenzanid, F7967, fenoxaprop, fenoxaprop-ethyl, fenoxaprop-ethyl + isoxadifen-ethyl, fentrazamide, flazasulfuron, florasulam, fluazifop, fluazifop-P-butyl, flucetosulfuron (LGC-421530, flufenacet, flufenpyr-Ethyl, flumetsulam, flumiclorac-pentyl, flumioxazin, fluometuron, flupyrsulfuron, fluroxypyr, fomesafen, foramsulfuron, fumiclorac, glufosinate, glufosinate-ammonium, glufosinate-P, glyphosate, halosulfuron, haloxyfop-methyl, haloxyfop-R, imazamethabenz, imazamox, imazapic, imazapyr, imazaquin, imazethapyr, imazosulfuron, indanofan, iodosulfuron, ioxynil, ipfencarbazone, IR 5790, isoproturon, isoxaben, isoxaflutole, KUH-021, lactofen, linuron, MCPA, mecoprop-P, mefenacet, mesosulfuron, mesotrione, metamifop, metazosulfuron, metolachlor, metosulam, metribuzin, metsulfuron, molinate, MSMA, napropamide, nicosulfuron, norflurazon, OK-9701, orthosulfamuron, oryzalin, oxadiargyl, oxadiazon, oxazichlomefone, oxyfluorfen, paraquat, pendimethalin, penoxsulam, pentoxazone, pethoxamid, picloram, picolinafen, piperophos, pretilachlor, profoxydim, propachlor, propanil, propyzamide, prosulfocarb, prosulfuron, pyraclonil, pyrazogyl, pyrazosulfuron, pyribenzoxim (LGC-40863), pyriftalid, pyriminobac-methyl, pyroxasulfone, pyroxsulam, primisulfuron, quinclorac, quizalofop-ethyl-D, S-3252, saflufenacil, sethoxydim, simazine, SL-0401, SL-0402, s-metolachlor, sulcotrione, sulfentrazone, sulfosate, tebuthiuron, terbacil, TH-547, thiazopyr, thiobencarb, triclopyr, trifluralin and tritosulfuron.

The synergistic composition of the present invention can, further, be used in conjunction with glyphosate, glufosinate, dicamba or imidazolinones on glyphosate-tolerant, glufosinate-tolerant, dicamba-tolerant or imidazolinone-tolerant crops. The synergistic composition of the present invention is particularly well-suited for use on 2,4-D-tolerant crops.

It is generally preferred to use the synergistic composition of the present invention in combination with herbicides that are selective for the crop being treated and which complement the spectrum of weeds controlled by these compounds at the application rate employed. It is further generally preferred to apply the synergistic composition of the present invention and other complementary herbicides at the same time, either as a combination formulation or as a tank mix.

The synergistic composition of the present invention can generally be employed in combination with known herbicide safeners, such as benoxacor, benthiocarb, brassinolide, cloquintocet (mexyl), cyometrinil, cyprosulfamate, daimuron, dichlormid, dicyclonon, dietholate, dimepiperate, disulfoton, fenchlorazole-ethyl, fenclorim, flurazole, fluxofenim, furilazole, harpin proteins, isoxadifen-ethyl, mefenpyr-diethyl, mephenate, MG 191, MON 4660, naphthalic anhydride (NA), oxabetrinil, R29148 and *N*-phenyl-sulfonylbenzoic acid amides, to enhance their selectivity.

In practice, it is preferable to use the synergistic composition of the present invention in mixtures containing an herbicidally effective amount of the herbicidal components along with at least one agriculturally acceptable adjuvant or carrier. Suitable adjuvants or carriers should not be phytotoxic to valuable crops, particularly at the concentrations employed in applying the compositions for selective weed control in the presence of crops, and should not react chemically with herbicidal components or other composition ingredients. Such mixtures can be designed for application directly to weeds or their locus or can be concentrates or formulations that are normally diluted with additional carriers and adjuvants before application. They can be solids, such as, for example, dusts, granules, water dispersible granules, or wettable powders, or liquids, such as, for example, emulsifiable concentrates, solutions, emulsions or suspensions.

Suitable agricultural adjuvants and carriers that are useful in preparing the herbicidal mixtures of the invention are well known to those skilled in the art. Some of these adjuvants include, but are not limited to, crop oil concentrate (mineral oil (85%) + emulsifiers (15%)); nonylphenol ethoxylate; benzylcocoalkyldimethyl quaternary ammonium salt; blend of petroleum hydrocarbon, alkyl esters, organic acid, and anionic surfactant; $C_9$-$C_{11}$ alkylpolyglycoside; phosphated alcohol ethoxylate; natural primary alcohol ($C_{12}$-$C_{16}$) ethoxylate; di-*sec*-butylphenol EO-PO block copolymer; polysiloxane-methyl cap; nonylphenol ethoxylate + urea ammonium nitrate; emulsified methylated seed oil; tridecyl alcohol (synthetic) ethoxylate (8EO); tallow amine ethoxylate (15 EO); PEG(400) dioleate-99.

Liquid carriers that can be employed include water and organic solvents. The organic solvents typically used include, but are not limited to, petroleum fractions or hydrocarbons such as mineral oil, aromatic solvents, paraffinic oils, and the like; vegetable oils such as soybean oil, rapeseed oil, olive oil, castor oil, sunflower seed oil, coconut oil, corn oil, cottonseed oil, linseed oil, palm oil, peanut oil, safflower oil, sesame oil, tung oil and the like; esters of the above vegetable oils; esters of monoalcohols or dihydric, trihydric, or other lower polyalcohols (4-6 hydroxy containing), such as 2-ethyl hexyl stearate, *n*-butyl oleate, isopropyl myristate, propylene glycol dioleate, di-octyl succinate, di-butyl adipate, di-octyl phthalate and the like; esters of mono, di and polycarboxylic acids and the like. Specific organic solvents include toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, *N*-methyl-2-pyrrolidinone, *N,N*-dimethyl alkylamides, dimethyl sulfoxide, liquid fertilizers and the like. Water is generally the carrier of choice for the dilution of concentrates.

Suitable solid carriers include talc, pyrophyllite clay, silica, attapulgus clay, kaolin clay, kieselguhr, chalk, diatomaceous earth, lime, calcium carbonate, bentonite clay, Fuller's earth, cottonseed hulls, wheat flour, soybean flour, pumice, wood flour, walnut shell flour, lignin, and the like.

It is usually desirable to incorporate one or more surface-active agents into the compositions of the present invention. Such surface-active agents are advantageously employed in both solid and liquid compositions, especially those designed to be diluted with carrier before application. The surface-active agents can be anionic, cationic or nonionic in character and can be employed as emulsifying agents, wetting agents, suspending agents, or for other purposes. Surfactants conventionally used in the art of formulation and which may also be used in the present formulations are described, *inter alia*, in "McCutcheon's Detergents and Emulsifiers Annual," MC Publishing Corp., Ridgewood, New Jersey, 1998 and in "Encyclopedia of Surfactants," Vol. I-III, Chemical Publishing Co., New York, 1980-81. Typical surface-active agents include salts of alkyl sulfates, such as diethanolammonium lauryl sulfate; alkylarylsulfonate salts, such as calcium dodecylbenzenesulfonate; alkylphenol-alkylene oxide addition products, such as nonylphenol-$C_{18}$ ethoxylate; alcohol-alkylene oxide addition products, such as tridecyl alcohol-$C_{16}$ ethoxylate; soaps, such as sodium stearate; alkylnaphthalene-sulfonate salts, such as sodium dibutylnaphthalenesulfonate; dialkyl esters of sulfosuccinate salts, such as sodium di(2-ethylhexyl) sulfosuccinate; sorbitol esters, such as sorbitol oleate; quaternary amines, such as lauryl trimethylammonium chloride; polyethylene glycol esters of fatty acids, such as polyethylene glycol stearate; block copolymers of ethylene oxide and propylene oxide; salts of mono- and dialkyl phosphate esters; vegetable oils such as soybean oil, rapeseed oil, olive oil, castor oil, sunflower seed oil, coconut oil, corn oil, cotton seed oil, linseed oil, palm oil, peanut oil, safflower oil, sesame oil, tung oil and the like; and esters of the above vegetable oils, particularly methyl esters.

Oftentimes, some of these materials, such as vegetable or seed oils and their esters, can be used interchangeably as an agricultural adjuvant, as a liquid carrier or as a surface active agent.

Other adjuvants commonly used in agricultural compositions include compatibilizing agents, antifoam agents, sequestering agents, neutralizing agents and buffers, corrosion inhibitors, dyes, odorants, spreading agents, penetration aids, sticking agents, dispersing agents, thickening agents, freezing point depressants, antimicrobial agents, and the like. The compositions may also contain other compatible components, for example, other herbicides, plant growth regulants, fungicides, insecticides, and the like and can be formulated with liquid fertilizers or solid, particulate fertilizer carriers such as ammonium nitrate, urea and the like.

The concentration of the active ingredients in the synergistic composition of the present invention is generally from 0.001 to 98 percent by weight. Concentrations from 0.01 to 90 percent by weight are often employed. In compositions designed to be employed as concentrates, the active ingredients are generally present in a concentration from 5 to 98 weight percent, preferably 10 to 90 weight percent. Such compositions are typically diluted with an inert carrier, such as water, before application. The diluted compositions usually applied to weeds or the locus of weeds generally contain 0.0001 to 1 weight percent active ingredient and preferably contain 0.001 to 0.05 weight percent.

The present compositions can be applied to weeds or their locus by the use of conventional ground or aerial dusters, sprayers, and granule applicators, by addition to irrigation water, and by other conventional means known to those skilled in the art.

The following examples illustrate the present invention.

Examples

Evaluation of Postemergence Herbicidal Activity of Mixtures under Field Conditions

Methodology

These trials were conducted under field conditions in Tolima, Colombia. Trial sites were located in commercially grown fields of common rice (*Oryza saliva*). The rice crop was grown using normal cultural practices for fertilization, seeding, and maintenance to ensure good growth of the crop and the weeds. The trials were conducted using normal research methodology. Trial plots were 3 meters (m) wide by 6 m long. All treatments were applied using a randomized complete block trial design with 4 replications per treatment. The trial sites had naturally occurring populations of weeds.

The weed spectrum included, but was not limited to, rice flatsedge (*Cyperus iria*, CYPIR); purple nutsedge (*Cyperus rotundus*, CYPRO); and common purslane, (*Portulaca oleracea,* POROL). The plots were treated with a postemergence foliar application 15 to 20 days after emergence of the rice.

Treatments consisted of tank mixes of soluble granules of aminopyralid tri-isopropanolammonium salt and commercially available formulations of 2,4-D (DMA 6 herbicide, water dispersible granules). The application volume was 160 liters per hectare (L/ha) of water. All application were made using precision gas hand sprayers using a 3 m boom using flat fan (80°) nozzles to broadcast the treatments over the top of the rice.

Evaluation

The treated plots and control plots were rated blind at various intervals after application. Ratings were based of Percent (%) Visual weed control, where 0 corresponds to no injury and 100 corresponds to complete kill.
Data were collected for all trials and analyzed using various statistical methods.
Colby's equation was used to determine the herbicidal effects expected from the mixtures (Colby, S. R. Calculation of the synergistic and antagonistic response of herbicide combinations. Weeds 1967 15, 20-22).
The following equation was used to calculate the expected activity of mixtures containing two active ingredients, A and B:

$$\text{Expected} = A + B - (A \times B / 100)$$

A = observed efficacy of active ingredient A at the same concentration as used in the mixture;
B = observed efficacy of active ingredient B at the same concentration as used in the mixture.
The results are summarized in Table 1.

**Table 1. Synergistic Herbicidal Activity 27 days after application**

| Application Rate | | % Control | | | | | |
|---|---|---|---|---|---|---|---|
| Aminopyralid | 2,4-D | CYPRO | | POROL | | CYPIR | |
| (rate in grams ae/ha) | | Obs | Expected* | Obs | Expected* | Obs | Expected* |
| 9 | 0 | 0 | - | 41 | - | 0 | - |
| 0 | 180 | 38 | - | 20 | - | 45 | - |
| 9 | 180 | 84 | 38 | 97 | 53 | 65 | 45 |
| 12 | 0 | 0 | - | 53 | - | 13 | - |
| 0 | 240 | 60 | - | 39 | - | 46 | - |
| 12 | 240 | 88 | 60 | 95 | 71 | 79 | 53 |

CYPRO - purple nutsedge *(Cyperus rotundus)*
POROL - common purslane *(Portulaca oleracea)*
CYPIR - rice flatsedge *(Cyperus iria)*
grams ae/ha - grams of acid equivalent per hectare
Obs - percent control observed
Expected* - percent control expected by Colby equation

**Claims**

**1.** A synergistic herbicidal mixture comprising an herbicidally effective amount of (a) aminopyralid and (b) 2,4-D, in which the weight ratio of 2,4-D to aminopyralid on an acid equivalent (ae) basis is between 10:1 and 20:1 or is 20:1.

**2.** The synergistic mixture of Claim 1, in which the aminopyralid is applied as an ester or a salt.

**3.** The synergistic mixture of Claim 1 or 2, in which 2,4-D is applied as an ester or a salt.

**4.** The synergistic mixture of Claim 1 or 3, wherein 2,4-D is a salt selected from the group consisting of sodium, isopropylammonium, dimethylammonium, diethanolammonium, di-isopropylammonium, triethanolammonium, tri-isopropylammonium, tri-isopropanolammonium and choline salts.

5. The synergistic mixture of Claim 1 or 2, wherein aminopyralid is a salt selected from the group consisting of potassium, dimethylammonium and tri-isopropanolammonium salts.

6. An herbicidal composition comprising an herbicidally effective amount of the synergistic herbicidal mixture of Claim 1 and an agriculturally acceptable adjuvant or carrier.

7. A method of controlling undesirable vegetation which comprises contacting the vegetation or the locus thereof with an herbicidally effective amount the synergistic herbicidal mixture of Claim 1 and in which the undesirable vegetation is in rice.

8. The method of Claim 7 for use on 2,4-D-tolerant crops.

9. The method of Claim 7, wherein the synergistic herbicidal mixture is applied at an application rate of between 104 grams acid equivalent per hectare (gae/ha) and 1180 gae/ha based on the total amount of active ingredients in the composition, preferably at an application rate between 180 gae/ha and 840 gae/ha.

10. The method of Claim 7, wherein 2,4-D is applied at a rate between 180 gae/ha and 240 gae/ha, and aminopyralid is applied at a rate between 9 gae/ha and 12 gae/ha.

11. The method of Claim 7, wherein 2,4-D is a salt selected from the group consisting of sodium, isopropylammonium, dimethylammonium, diethanolammonium, di-isopropylammonium, triethanolammonium, tri-isopropylammonium, tri-isopropanolammonium and choline salts.

12. The method of Claim 7, wherein aminopyralid is a salt selected from the group consisting of potassium, dimethylammonium and tri-isopropanolammonium salts.

**Patentansprüche**

1. Eine synergistische herbizide Mischung, enthaltend eine herbizid wirksame Menge von (a) Aminopyralid und (b) 2,4-D, in welcher das Gewichtsverhältnis von 2,4-D zu Aminopyralid auf einer Säureäquivalentbasis (ae) zwischen 10:1 und 20:1 beträgt oder 20:1 ist.

2. Die synergistische Mischung gemäß Anspruch 1, in welcher das Aminopyralid als ein Ester oder ein Salz angewandt wird.

3. Die synergistische Mischung gemäß Anspruch 1 oder 2, in welcher 2,4-D als ein Ester oder ein Salz angewandt wird.

4. Die synergistische Mischung gemäß Anspruch 1 oder 3, wobei 2,4-D ein Salz ausgewählt aus der Gruppe bestehend aus Natrium-, Isopropylammonium-, Dimethylammonium-, Diethanolammonium-, Di-isopropylammonium-, Triethanolammonium-, Triisopropylammonium-, Triisopropanolammonium- und Cholinsalzen ist.

5. Die synergistische Mischung gemäß Anspruch 1 oder 2, wobei Aminopyralid ein Salz ausgewählt aus der Gruppe bestehend aus Kalium-, Dimethylammonium- und Triisopropanolammoniumsalzen ist.

6. Eine herbizide Zusammensetzung enthaltend eine herbizid wirksame Menge der synergistischen herbiziden Mischung gemäß Anspruch 1 und einen landwirtschaftlich akzeptablen Hilfs- oder Trägerstoff.

7. Ein Verfahren zur Bekämpfung unerwünschter Vegetation, welches das In-Kontakt-Bringen der Vegetation oder des Ortes derselben mit einer herbizid wirksamen Menge der synergistischen herbiziden Mischung gemäß Anspruch 1 umfasst und in welchem die unerwünschte Vegetation in Reis vorliegt.

8. Das Verfahren gemäß Anspruch 7 zur Anwendung auf 2,4-D-toleranten Nutzpflanzen.

9. Das Verfahren gemäß Anspruch 7, wobei die synergistische herbizide Mischung in einer Anwendungsmenge von zwischen 104 g Säureäquivalent pro Hektar (gae/ha) und 1.180 gae/ha, bezogen auf die Gesamtmenge an aktiven Inhaltsstoffen in der Zusammensetzung, angewandt wird, vorzugsweise in einer Anwendungsmenge zwischen 180 gae/ha und 840 gae/ha.

10. Das Verfahren gemäß Anspruch 7, wobei 2,4-D in einer Menge zwischen 180 gae/ha und 240 gae/ha angewandt wird und Aminopyralid in einer Menge zwischen 9 gae/ha und 12 gae/ha angewandt wird.

11. Das Verfahren gemäß Anspruch 7, wobei 2,4-D ein Salz ausgewählt aus der Gruppe bestehend aus Natrium-, Isopropylammonium- Dimethylammonium-, Diethanolammonium-, Diisopropylammonium-, Triethanolammonium-, Trüsopropylammonium-, Triisopropanolammonium- und Cholinsalzen ist.

12. Das Verfahren gemäß Anspruch 7, wobei Aminopyralid ein Salz ausgewählt aus der Gruppe bestehend aus Kalium-, Dimethylammonium- und Triisopropanolammoniumsalzen ist.

**Revendications**

1. Mélange herbicide synergique comprenant, en une quantité à effet herbicide, (a) de l'aminopyralide, et (b) du 2,4-D, dans lequel le rapport pondéral du 2,4-D à l'aminopyralide, exprimé en équivalent acide (ea), est compris dans l'intervalle allant de 10/1 à 20/1 ou est égal à 20/1.

2. Mélange synergique conforme à la revendication 1, dans lequel l'aminopyralide est appliqué sous la forme d'un ester ou d'un sel.

3. Mélange synergique conforme à la revendication 1 ou 2, dans lequel le 2,4-D est appliqué sous la forme d'un ester ou d'un sel.

4. Mélange synergique conforme à la revendication 1 ou 3, dans lequel le 2,4-D est un sel choisi dans l'ensemble constitué par les sels de sodium, diméthyl-ammonium, isopropylammonium, diéthanol-ammonium, di-isopropyl-ammonium, triéthanol-ammonium, triisopropyl-ammonium, tri-isopropanol-ammonium et choline.

5. Mélange synergique conforme à la revendication 1 ou 2, dans lequel l'aminopyralide est un sel choisi dans l'ensemble constitué par les sels de potassium, diméthyl-ammonium et tri-isopropanol-ammonium.

6. Composition herbicide comprenant, en une quantité à effet herbicide, un mélange herbicide synergique conforme à la revendication 1, et un adjuvant ou véhicule admissible en agriculture.

7. Procédé de lutte contre des végétaux indésirables, qui comporte le fait de mettre ces végétaux ou l'endroit où ils poussent en contact avec un mélange herbicide synergique conforme à la revendication 1, employé en une quantité à effet herbicide, et dans lequel les végétaux indésirables poussent en rizière.

8. Procédé conforme à la revendication 7, pour l'utilisation sur des cultures tolérantes au 2,4-D.

9. Procédé conforme à la revendication 7, dans lequel le mélange herbicide synergique est appliqué à une dose comprise dans l'intervalle allant de 104 grammes d'équivalent acide par hectare (gea/ha) à 1180 gea/ha, de préférence, à une dose de 180 gea/ha à 840 gea/ha, ladite dose correspondant à la quantité totale d'ingrédients actifs dans la composition.

10. Procédé conforme à la revendication 7, dans lequel le 2,4-D est appliqué à une dose de 180 gea/ha à 240 gea/ha, et l'aminopyralide est appliqué à une dose de 9 gea/ha à 12 gea/ha.

11. Procédé conforme à la revendication 7, dans lequel le 2,4-D est un sel choisi dans l'ensemble constitué par les sels de sodium, diméthyl-ammonium, isopropyl-ammonium, diéthanol-ammonium, di-isopropyl-ammonium, triéthanol-ammonium, tri-isopropylammonium, tri-isopropanol-ammonium et choline.

12. Procédé conforme à la revendication 7, dans lequel l'aminopyralide est un sel choisi dans l'ensemble constitué par les sels de potassium, diméthyl-ammonium et tri-isopropanolammonium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090325803 A1

### Non-patent literature cited in the description

- Herbicide Handbook of the Weed Science Society of America. 2002, 462
- **J. A. FERRELL et al.** *Weed Technology,* 2006, vol. 20 (2), 453-457
- **S. E. ENLOE et al.** *Invasive Plant Science and Management,* vol. 1 (4), 385-389
- The Pesticide Manual. 2006
- McCutcheon's Detergents and Emulsifiers Annual. MC Publishing Corp, 1998
- Encyclopedia of Surfactants. Chemical Publishing Co, 1980, vol. I-III
- **COLBY, S. R.** Calculation of the synergistic and antagonistic response of herbicide combinations. *Weeds,* 1967, vol. 15, 20-22